# EUROPEAN PATENT SPECIFICATION

(11) **EP 3 370 188 B1**
(45) Date of publication and mention of the grant of the patent: **13.03.2024**
(21) Application number: 17785408.0
(22) Date of filing: 17.04.2017
(51) Int. Cl.: G06V 10/44, G06V 10/764, G06V 10/82, G06V 40/16

(54) **FACIAL VERIFICATION METHOD, DEVICE, AND COMPUTER STORAGE MEDIUM**
GESICHTSÜBERPRÜFUNGSVERFAHREN, VORRICHTUNG SOWIE COMPUTERSPEICHERMEDIUM
PROCÉDÉ DE VÉRIFICATION FACIALE, DISPOSITIF ET SUPPORT DE STOCKAGE INFORMATIQUE

(30) Priority: 21.04.2016 CN 201610250901
(43) Date of publication of application: 05.09.2018
(73) Proprietor: Tencent Technology (Shenzhen) Company Limited, Shenzhen, Guangdong, 518057 (CN)
(72) Inventor: WANG, Chengjie, Shenzhen Guangdong 518057 (CN); LI, Jilin, Shenzhen Guangdong 518057 (CN); LIANG, Yicong, Shenzhen Guangdong 518057 (CN)
(74) Representative: Gunzelmann, Rainer
(86) International application number: PCT/CN2017/080745
(87) International publication number: WO 2017/181923

(56) References cited:
- WO-A1-2016/015170
- CN-A- 102 572 201
- CN-A- 105 117 692
- CN-A- 105 930 797
- US-A1- 2006 133 651
- US-A1- 2015 347 820
- THIRIMACHOS BOURLAI ET AL: "Restoring Degraded Face Images: A Case Study in Matching Faxed, Printed, and Scanned Photos", IEEE TRANSACTIONS ON INFORMATION FORENSICS AND SECURITY, IEEE, PISCATAWAY, NJ, US, vol. 6, no. 2, June 2011 (2011-06), pages 371-384, XP011322761, ISSN: 1556-6013, DOI: 10.1109/TIFS.2011.2109951
- Zhenyao Zhu ET AL: "Recover Canonical-View Faces in the Wild with Deep Neural Networks", , 16 April 2014 (2014-04-16), XP055513435, Retrieved from the Internet: URL:https://arxiv.org/ftp/arxiv/papers/140 4/1404.3543.pdf [retrieved on 2018-10-08]
- GAO S ET AL: "Single Sample Face Recognition via Learning Deep Supervised Autoencoders", IEEE TRANSACTIONS ON INFORMATION FORENSICS AND SECURITY, IEEE, PISCATAWAY, NJ, US, vol. 10, no. 10, October 2015 (2015-10), pages 2108-2118, XP011665398, ISSN: 1556-6013, DOI: 10.1109/TIFS.2015.2446438 [retrieved on 2015-08-06]
- ANDRADE R A ET AL: "REAL-TIME OPTICALLY PROCESSED FACE RECOGNITION SYSTEM BASED ON ARBITRARY MOIRE CONTOURS", OPTICAL ENGINEERING, SOC. OF PHOTO-OPTICAL INSTRUMENTATION ENGINEERS, BELLINGHAM, vol. 35, no. 9, September 1996 (1996-09), pages 2534-2540, XP000633944, ISSN: 0091-3286, DOI: 10.1117/1.600866

## Description

### Technical Field

The invention relates to the technical field of communications, and particularly relates to a face verification method and device, and a computer storage medium.

### Background

Along with the rapid development of Internet technologies, ensuring security of a user account by face verification becomes particularly important. Face verification, as a branch in the field of face recognition, automatically verify two face photos by using a face verification algorithm to judge whether they belong to the same person or not. This manner may be applied to implement identity verification based on user faces in various scenarios including e.g., Internet finance.

At present, for protecting privacy security of citizens, moire fringe watermarks may be added before photos are transmitted, thereby acquiring moire fringe photos, for example, identification photos like identity card face photos, social security card face photos and pass face photos. When face verification is performed based on a moire fringe photo, a professional removes a moire fringe from the moire fringe photo by using a noise removal algorithm, and then performs restoring and/or other operations on the photo from which the moire fringe is removed and finally verifies the photo from which the moire fringe is removed.

In a research and practicing process of a related art, the image processing method for realizing moire fringe removal needs to be manually implemented and a higher requirement is made on a professional skill of an operator, so that there may exist problems of lower face verification efficiency and low face verification accuracy.

Relevant prior art further includes Thirimachos Bourlai et al.: "Restoring Degraded Face Images: A Case Study in Matching Faxed, Printed, and Scanned Photos",IEEE Transactions on Information Forensics and Security, vol. 6, no. 2, June 2011 (2011-06), pages 371-384, ISSN: 1556-6013, DOI: 10.1109/TIFS.2011.2109951 and Zhenyao Zhu et al.: "Recover Canonical-View Faces in the Wild with Deep Neural Networks",16 April 2014 (2014-04-16).

### Summary

Embodiments of the invention provide a computer-implemented face verification method as recited in claim 1, and a face verification device as recited in claim 5, and a computer storage medium as recited in claim 8, which may improve face verification efficiency and accuracy.

The scope of protection of the current invention is provided by the appended claims.

### Brief Description of the Drawings

Exemplary implementation modes of the invention will be described below in combination with the drawings in detail to make the technical solutions and other beneficial effects of the invention more explicit.
FIG. 1a is a schematic diagram illustrating a scenario of a face verification method according to an embodiment of the invention.
FIG. 1b is a flowchart illustrating a face verification method according to a first embodiment of the invention.
FIG. 1c is a schematic diagram illustrating a moire fringe face image in a face verification method according to a first embodiment of the invention.
FIG. 2a is a flowchart illustrating a face verification method according to a second embodiment of the invention.
FIG. 2b to FIG. 2e are detailed flowcharts illustrating a face verification method according to a second embodiment of the invention.
FIG. 3a is a structure diagram illustrating a face verification device according to a third embodiment of the invention.
FIG. 3b is another structure diagram illustrating a face verification device according to a third embodiment of the invention.
FIG. 4 is a structure diagram illustrating a server according to a fourth embodiment of the invention.

### Detailed Description of the Embodiments

In the drawings, the same component symbols represent the same components. The principle of the invention is described with implementation in a proper operating environment as an example. The following descriptions are made based on exemplary embodiments of the invention, but they should not be considered to exclude other exemplary embodiments, which are not elaborated herein, of the invention.

In the following descriptions, the exemplary embodiments of the invention will be described with reference to steps or symbols executed by one or more computers, unless otherwise noted. Therefore, these steps and operations will be mentioned for a number of times to be executed by the computers, and execution performed by the computers mentioned in the application includes an operation of a computer processing unit on an electronic signal representing data in a structured form. Such an operation converts data or keeps the data at a position in a memory system of the computer, so that running of the computer may be changed by reconfiguration or in a manner well known to those skilled in the art. The data structure in which the data is kept is a physical position of the memory, and the data has a specific characteristic defined by the data format. However, the above text describing the principle of the invention is not a limit and those skilled in the art may learn about that multiple steps and operations described below may also be implemented in hardware.

Term "module" used in the embodiments of the invention may be considered as a software object executed on an operating system. Different components, modules, engines and service of the embodiments of the invention may be considered as implementation objects on the operating system. A device and method of the embodiments of the invention may be implemented in a software manner, and of course, may alternatively be implemented on hardware. Both implementation manners shall fall within the scope of protection of the embodiments of the invention.

Some embodiments of the invention provide a face verification method and device.

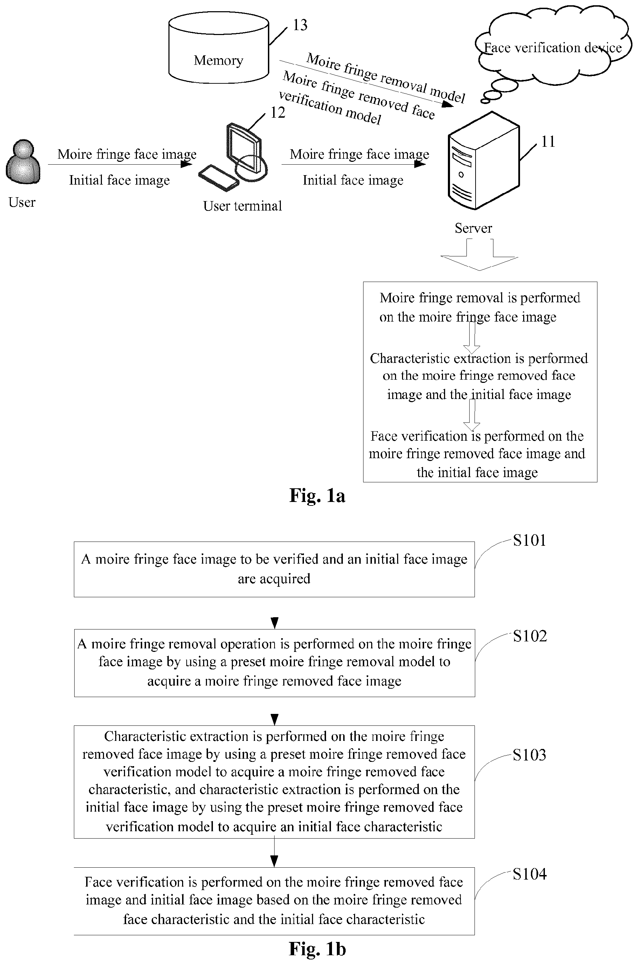

Referring to FIG. 1a, FIG. 1a is a schematic diagram illustrating a scenario of a face verification method according to an embodiment of the invention.

The scenario may include a server 11. The server 11 includes the face verification device of the embodiments of the invention, which is configured to acquire a moire fringe face image to be verified and an initial face image, perform a moire fringe removal operation on the moire fringe face image by using a preset moire fringe removal model to acquire a moire fringe removed face image, then perform characteristic extraction on the moire fringe removed face image by using a preset moire fringe removed face verification model to acquire a moire fringe removed face characteristic, perform characteristic extraction on the initial face image by using the preset moire fringe removed face verification model to acquire an initial face characteristic, and finally perform face verification on the moire fringe removed face image and the initial face image based on the moire fringe removed face characteristic and the initial face characteristic.

In addition, the scenario may also include a memory 13, which is configured to store the preset moire fringe removal model and the preset moire fringe removed face verification model and provide the preset moire fringe removal model and the preset moire fringe removed face verification model for the server 11 including the face verification device, so that the server 11 can call the preset moire fringe removal model and the preset moire fringe removed face verification model to perform the moire fringe removal operation and the characteristic extraction respectively. Of course, the scenario may further include a user terminal 12, configured to receive the moire fringe face image with a face verification requirement and initial face image input by a user, for example, an identity card face image and a selfie face image, and send the moire fringe face image and the initial face image to the server 11 including the face verification device for face verification.

Detailed descriptions will be made below respectively.

### First embodiment

In the embodiment, a face verification device is described, and the face verification device may be integrated in network equipment, for example, a server.

Referring to FIG. 1b, FIG. 1b is a flowchart illustrating a face verification method according to a first embodiment of the invention.

The face verification method may be applied to a face verification device. The method includes Steps S101 to S104.

In Step S101, a moire fringe face image to be verified and an initial face image are acquired.

In Step S102, a moire fringe removal operation is performed on the moire fringe face image by using a preset moire fringe removal model to acquire a moire fringe removed face image.

In an exemplary embodiment, Step S101 and Step S102 may be implemented as follows.

As an implementation mode, the face verification device acquires the moire fringe face image to be verified and the initial face image and then judge whether faces in the moire fringe face image and the initial face image belong to the same person or not to complete face verification.

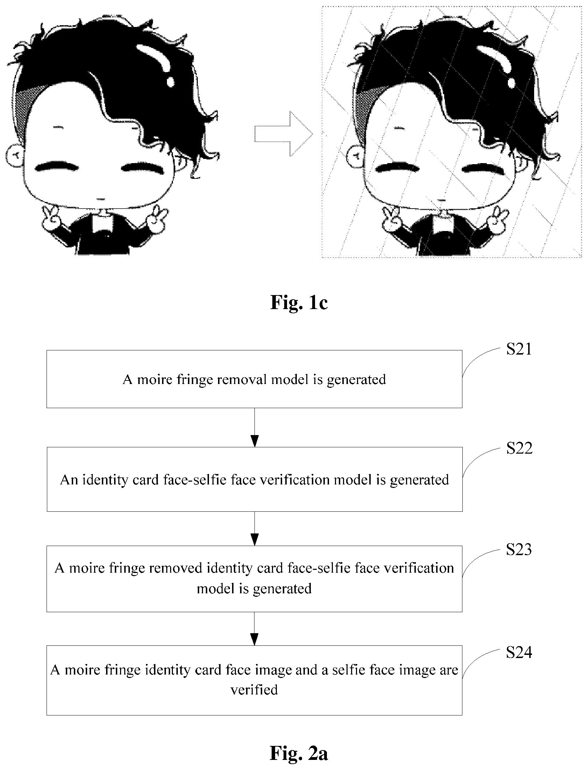

In the embodiment of the invention, the moire fringe face image refers to a face photo added with a moire fringe watermark, for example, an identification photo such as an identity card face photo, a social security card face photo and a pass face photo. An example of the moire fringe face image is shown in FIG. 1c, which is a simple schematic diagram illustrating the moire fringe face image. The initial face image refers to a face photo without any moire fringe watermark, for example, a face photo shot by a user.

In the embodiments of the invention, before the moire fringe face image to be verified and the initial face image are acquired, the preset moire fringe removal model is generated. The generation of the preset moire fringe removal model may include Steps 1 to 4.

In Step 1, first-type face images are acquired, and a first face data collection is constructed according to the first-type face images.

In Step 2, synthesizing is performed on the first face data collection based on one or more preset moire fringe watermarks to acquire a first moire fringe face data collection.

In Step 3, moire fringe removal Convolutional Neural Network (CNN) training is performed based on the first face data collection and the first moire fringe face data collection to generate a moire fringe removal model.

In Step 4, the generated moire fringe removal model is determined as the preset moire fringe removal model.

As an implementation mode, the face verification device may acquire multiple face photos, determine the multiple acquired face photos as the first-type face images, construct the first face data collection according to the first-type face images and record the first face data collection in a preset memory for calling.

The face verification device may perform synthesizing on the first-type face images in the first face data collection based on one or more preset moire fringe watermarks, namely adding one or more moire fringe watermarks onto the first-type face images, thereby acquiring the first moire fringe face data collection. Then, the face verification device may perform moire fringe removal CNN training based on the first face data collection and the first moire fringe face data collection, thereby generating the moire fringe removal model.

A moire fringe removal CNN may include a convolution layer, a batch_normalization layer, a deconvolution layer and the like. In the embodiment of the invention, the moire fringe removal CNN training is applied to minimize a sum of absolute values of differences between pixel values of the face photos from which moire fringes are removed and corresponding original face photos.

Definitions about the convolution layer, the batch_normalization layer and the deconvolution layer and a training manner of the moire fringe removal CNN may be implemented with reference to an existing deep neural network training framework and will not be described herein.

It is important to note that descriptions with terms "first", "second", "third" and the like in the embodiments of the invention are adopted not to represent a logical relationship, sequential relationship or the like between photos of each type but only to distinguish the photos of each type in the specification.

In Step S103, characteristic extraction is performed on the moire fringe removed face image by using a preset moire fringe removed face verification model to acquire a moire fringe removed face characteristic, and characteristic extraction is performed on the initial face image by using the preset moire fringe removed face verification model to acquire an initial face characteristic.

Here, as an implementation mode, the face verification device may generate the moire fringe removed face verification model and store the moire fringe removed face verification model in the memory in advance. After the moire fringe removal operation is performed on the moire fringe face image to be verified to acquire the moire fringe removed face image, the preset moire fringe removed face verification model may be called to perform characteristic extraction on the moire fringe removed face image and the initial face image respectively, thereby acquiring the moire fringe removed face characteristic and the initial face characteristic.

In the embodiment of the invention, characteristic extraction is a concept in computer vision and image processing, and refers to extracting image information with a computer and determining whether each point of an image belongs to the same image characteristic or not. A characteristic extraction result is to divide the points on the image into different subsets, and these subsets usually include isolated points, continuous curves or continuous regions, so that the face verification device may perform comparison and judgment according to the characteristic extraction result.

In the embodiments of the invention, before acquiring the moire fringe face image to be verified and the initial face image, the face verification device generates a first face verification model, thereby generating the preset moire fringe removed face verification model according to the first face verification model. The generation of the first face verification mode includes Steps a to c.

In Step a, second-type face images are acquired, and a second face data collection is constructed according to the second-type face images.

In Step b, third-type face images corresponding to the second face data collection are acquired, and a third face data collection is constructed according to the third-type face images.

In Step c, face verification CNN training is performed based on the second face data collection and the third face data collection to generate a first face verification model.

For example, the face verification device may acquire multiple face photos, determine the multiple acquired face photos as the second-type face images, construct the second face data collection according to the second-type face images and record the second face data collection in the preset memory for calling.

In the embodiment of the invention, the first-type face images and the second-type face images may all be identity card face photos. However, the first-type face images are different from the second-type face images. For example, in a case that an identity card face photo A is a first-type face image, the identity card face photo A is not a second-type face image. That is, the face images in the first face data collection and the second face data collection are not duplicated.

The operation that the third-type face images corresponding to the second-type face images are acquired in Step b may include that: selfie face photos (i.e., the third-type face images) corresponding to identity card face photos (i.e., the second-type face images in the second face data collection) are acquired, and a data collection of the selfie face photos is constructed according to the selfie face photos.

Then, the face verification device performs face verification CNN training based on the second face data collection and the third face data collection so as to generate a first face verification model, and generates the preset moire fringe removed face verification model according to the first face verification mode. The generation of the moire fringe removed face verification model includes Steps d to g.

In Step d, synthesizing is performed on the second face data collection based on one or more preset moire fringe watermarks to acquire a second moire fringe face data collection.

In Step e, the moire fringe removal operation is performed on each image in the second moire fringe face data collection by using the moire fringe removal model to generate a moire fringe removed face data collection.

In Step f, network fine-tuning is performed on the first face verification model according to the moire fringe removed face data collection and the third face data collection to generate a second face verification model.

In Step g, the second face verification model is determined as the preset moire fringe removed face verification model.

As an implementation mode, the face verification device may add one or more moire fringe watermarks to the second-type face images in the second face data collection acquired in Step a based on the one or more preset moire fringe watermarks, thereby acquiring the second moire fringe face data collection. Then the face verification device may perform the moire fringe removal operation on each image in the second moire fringe face data collection by using the moire fringe removal model acquired in Step 3. The face verification device may finally perform network fine-tuning on the first face verification model acquired in Step c according to the moire fringe removed face data collection and the third face data collection, thereby generating the second face verification model, i.e., the preset moire fringe removed face verification model.

In the embodiment, the first face verification model may be embodied as a "second-type face-third-type face" verification model, for example, an "identity card face-selfie face" verification mode. The second face verification model may be embodied as a "moire fringe removed face-third-type face" verification model, for example, a "moire fringe removed identity card face-selfie face" verification model.

A face verification CNN may be implemented with reference to an existing face verification algorithm using a deep neural network, a training manner of the CNN may be implemented with reference to an existing deep neural network training framework and they will not be specifically described herein. When the face verification CNN is trained, a loop iteration manner is adopted to train a network model. During primary training, the parameter is initially selected in a random manner, that is, an initial parameter of the network model may be configured in the random manner. A network fine-tuning manner includes that: under the condition that a network structure is kept unchanged, the parameter for training the network model this time is determined as an initial value for next model training, and training is continued to be performed based on the parameter for training the network model this time as a parameter for training the network model in next round until a final face verification CNN is acquired.

In Step S104, face verification is performed on the moire fringe removed face image and the initial face image based on the moire fringe removed face characteristic and the initial face characteristic.

As an implementation mode, the face verification device may perform face verification on the moire fringe removed face image and the initial face image based on the moire fringe removed face characteristic and the initial face characteristic in a manner including Steps S1041 to S1044.

In Step S1041, a similarity between the moire fringe removed face characteristic and the initial face characteristic is calculated to acquire a similarity value.

In Step S1042, whether the moire fringe removed face image and the initial face image belong to the same person or not is judged based on the similarity value.

In Step S1043, in a case that a judgment result indicates that the moire fringe removed face image and the initial face image belong to the same person, it is determined that the face verification succeeds.

In Step S1044, in a case that a judgment result indicates that the moire fringe removed face image and the initial face image do not belong to the same person, it is determined that the face verification fails.

For example, the face verification device performs characteristic distance calculation on the moire fringe removed face characteristic and the initial face characteristic to acquire the similarity between the moire fringe removed face characteristic and the initial face characteristic.

The operation that whether the moire fringe removed face image and the initial face image belong to the same person or not is judged based on the similarity value (i.e., Step S1042) may include that:
in a case that the similarity value exceeds a preset threshold value, it is determined that the moire fringe removed face image and the initial face image belong to the same person; and
in a case that the similarity value does not exceed the preset threshold value, it is determined that the moire fringe removed face image and the initial face image do not belong to the same person.

In some implementation modes, the operation that the similarity between the moire fringe removed face characteristic and the initial face characteristic is calculated (i.e., Step S1041) may include that: the similarity between the moire fringe removed face characteristic and the initial face characteristic may be calculated by using any algorithm in a Euclidean distance algorithm, a Cosine (cos) distance algorithm, a joint Bayesian algorithm and a metric learning algorithm.

In a case that the similarity value exceeds the preset threshold value, it can be determined that the moire fringe removed face image and the initial face image belong to the same person, that is, the face verification device determines that the face verification succeeds. In a case that the similarity value does not exceed the preset threshold value, it can be determined that the moire fringe removed face image and the initial face image do not belong to the same person, that is, the face verification device determines that the face verification fails.

In the face verification method provided by the embodiment of the invention, the moire fringe removal operation is automatically performed on the moire fringe face image to be verified by using the preset moire fringe removal model to acquire the moire fringe removed face image; then, characteristic extraction is performed on the moire fringe removed face image and the initial face image by using the preset moire fringe removed face verification model to acquire the moire fringe removed face characteristic and the initial face characteristic respectively; and finally, face verification is performed on the moire fringe removed face image and the initial face image based on the moire fringe removed face characteristic and the initial face characteristic. That is, according to the embodiment of the invention, automatic processing analysis is performed on the moire fringe face image to be verified and the initial face image according to the pretrained moire fringe removal model and moire fringe removed face verification model. By virtue of this solution, whether the moire fringe face image and the initial face image belong to the same person or not can be automatically judged without manual operations of a professional, so that face verification efficiency and accuracy can be improved.

### Second embodiment

Based on the method described in the first embodiment, detailed descriptions will be made below with an example.

In the embodiment, a verification process for a moire fringe identity card face photo and a selfie face photo will be described in detail with the moire fringe identity card face photo and the selfie face photo of a user as an example.

FIG. 2a is a flowchart illustrating a face verification method according to a second embodiment of the invention.

The flow of the method mainly includes Steps S21 to S24. In Step S21, a moire fringe removal model is generated. In Step S22, an "identity card face-selfie face" verification model is generated. In Step S23, a "moire fringe removed identity card face-selfie face" verification model is generated. In Step S24, a moire fringe identity card face image and a selfie face image are verified. The method may be implemented as follows.

In Step S21, the moire fringe removal model is generated.

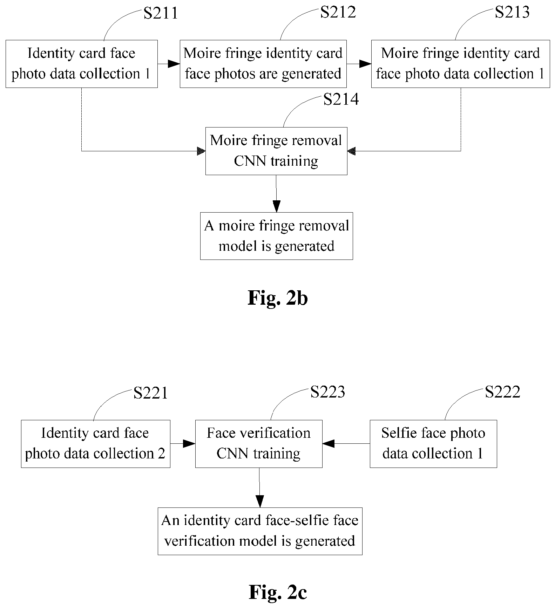

FIG. 2b is a flowchart illustrating the generation of a moire fringe removal model according to the embodiment of the application. The generation of the moire fringe removal model includes Steps S211 to S213.

In Step S211, an identity card face photo data collection 1 is constructed.

For example, a face verification device acquires identity card face images and constructs the identity card face photo data collection 1 according to the identity card face images.

In Step S212, moire fringe identity card face photos are generated.

In Step S213, a moire fringe identity card face photo data collection 1 is constructed.

As an implementation mode, the face verification device may randomly select multiple moire fringe watermarks and perform moire fringe watermark synthesis on each face photo in the identity card face photo data collection 1, thereby acquiring multiple corresponding moire fringe identity card face photos, which can be used in the construction of the moire fringe identity card face photo data collection 1.

A moire fringe watermark synthesis process may be implemented in a following manner. Multiple moire fringe watermarks are generated in advance, and the moire fringe identity card face photos can be acquired in a manner of synthesis, e.g., by directly replacing pixel values of the identity card face photo images with pixel values of moire fringe parts, fusing the pixel values of the watermarks and the pixel values of the identity card face photo images according to a certain proportion, or the like. There are no specific limits made herein.

In Step S214, moire fringe removal CNN training is performed to generate the moire fringe removal model.

For example, the face verification device performs moire fringe removal CNN training based on the identity card face photo data collection 1 and the corresponding moire fringe identity card face photo data collection 1 to acquire the moire fringe removal model. A moire fringe removal CNN may include a convolution layer, a batch_normalization layer, a deconvolution layer and the like. A training optimization purpose is to make a sum of absolute values of differences between pixel values of the identity card face photos from which moire fringes are removed and corresponding original identity card face photos minimum.

Specific definitions about the convolution layer, the batch_normalization layer and the deconvolution layer and a training manner of the moire fringe removal CNN may be implemented with reference to an existing deep neural network training framework and will not be specifically described herein.

In Step S22, the "identity card face-selfie face" verification model is generated

FIG. 2c is a flowchart illustrating the generation of an "identity card face-selfie face" verification model according to the application. The generation of "identity card face-selfie face" verification model may include Steps S221 to S223.

In Step S221, an identity card face photo data collection 2 is constructed.

As an implementation mode, the face verification device acquires identity card face images, and constructs the identity card face photo data collection 2 according to the acquired identity card face images.

In the embodiment of the application, the photos in the identity card face photo data collection 1 and the identity card face photo data collection 2 are different. For example, in a case that an identity card face photo A belongs to the identity card face photo data collection 1, the identity card face photo A does not belong to the identity card face photo data collection 2. That is, the face images in the identity card face photo data collection 1 and the identity card face photo data collection 2 are not duplicated.

In Step S222, a selfie face photo data collection 1 is constructed.

As an implementation mode, the face verification device acquires selfie face photos of persons corresponding to the identity card face photos in the identity card face photo data collection 2 and constructs the selfie face photo data collection 1 according to the selfie face photos.

In Step S223, face verification CNN training is performed to generate the "identity card face-selfie face" verification model.

As an implementation mode, the face verification device performs face verification CNN training based on the identity card face photo data collection 2 and the selfie face photo data collection 1 to acquire the "identity card face-selfie face" verification model.

In Step S23, the "moire fringe removed identity card face-selfie face" verification mode is generated.

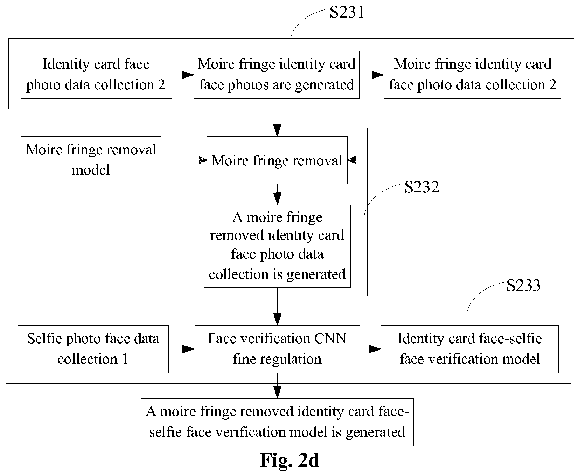

FIG. 2d is a flowchart illustrating the generation of a "moire fringe removed identity card face-selfie face" verification model according to an embodiment of the application. The generation of the "moire fringe removed identity card face-selfie face" verification model may include Steps S231 to S233.

In Step S231, a moire fringe identity card face photo data collection 2 is constructed.

For example, the face verification device generates moire fringe identity card face photos based on the identity card face photo data collection 2, and constructs the moire fringe identity card face photo data collection 2. A generation process for moire fringe identity card face photos in the moire fringe identity card face photo data collection 2 is the same as the process of Step S212 and Step S213.

In Step S232, a moire fringe removal operation is performed on the moire fringe identity card face photo data collection 2 to generate a moire fringe removed identity card face photo data collection.

As an implementation mode, the face verification device performs the moire fringe removal operation on each photo in the moire fringe identity card face photo data collection 2 by using the moire fringe removal model acquired in Step S214, so as to generate the moire fringe removed identity card face photo data collection.

In Step S233, network fine-tuning is performed on the "identity card face-selfie face" verification model to generate a "moire fringe removed identity card face-selfie face" verification model.

As an implementation mode, the face verification device performs network fine regulation on the "identity card face-selfie face" verification model acquired in Step S223 by using the moire fringe removed identity card face photo data collection and the selfie face data collection 1, so as to acquire the "moire fringe removed identity card face-selfie face" verification model.

A face verification CNN may be implemented with reference to an existing face verification algorithm using a deep neural network. A training manner of the CNN and a network fine regulation manner may be implemented with reference to an existing deep neural network training framework and they will not be specifically described herein.

In Step S24, the moire fringe identity card face image and the selfie face image are verified.

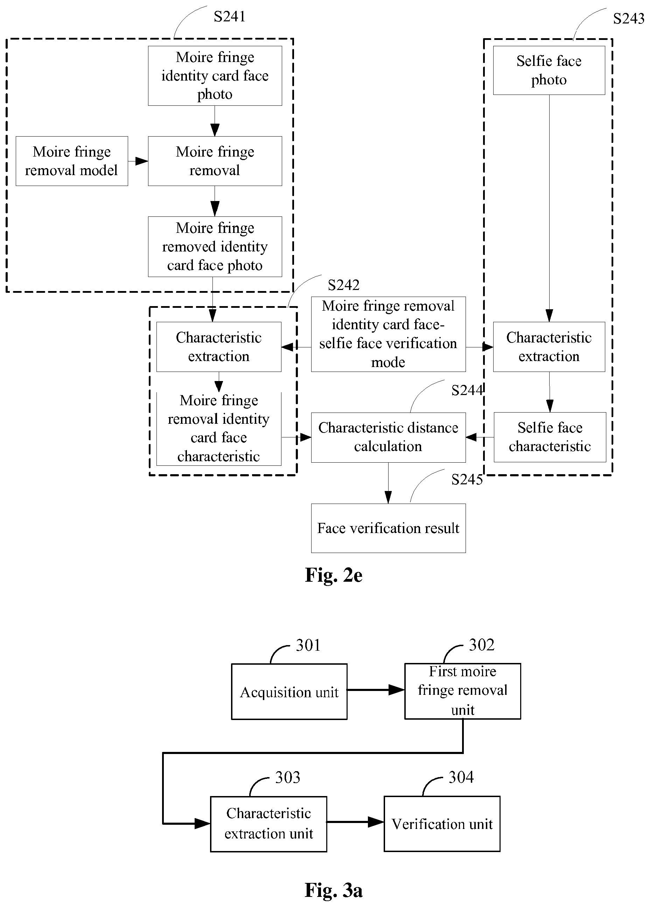

FIG. 2e is a flowchart illustrating the verification of a moire fringe identity card face image and a selfie face image according to an embodiment of the invention.

The verification of the moire fringe identity card face image and the selfie face image may include Steps S241 to S245.

In Step S241, the moire fringe removal operation is performed on the moire fringe identity card face photo to generate a moire fringe removed identity card face photo.

As an implementation mode, the face verification device may perform the moire fringe removal operation on the input moire fringe identity card face photo by using the moire fringe removal model acquired in Step S214, so as to acquire the moire fringe removed identity card face photo.

In Step S242, characteristic extraction is performed on the moire fringe removed identity card face photo to acquire a moire fringe removed identity card face characteristic.

In Step S243, characteristic extraction is performed on the selfie face photo to acquire a selfie face characteristic.

The face verification device may perform characteristic extraction on the moire fringe removed identity card face photo by using the "moire fringe removed identity card face-selfie face" verification mode acquired in Step S233, so as to acquire the moire fringe removed identity card face characteristic, and may perform characteristic extraction on the selfie face photo by using the "moire fringe removed identity card face-selfie face" verification model acquired in Step S233, so as to acquire the selfie face characteristic.

In Step S244, characteristic distance calculation is performed on the moire fringe removed identity card face characteristic and the selfie face characteristic.

As an implementation mode, the face verification device may calculate a similarity between the moire fringe removed identity card face characteristic and the selfie face characteristic. The similarity may be calculated by using a Euclidean distance and a cos distance or by using a more advanced joint Bayesian method, a metric learning method or the like.

In Step S245, a face verification result is acquired according to a calculation result.

As an implementation mode, the face verification device compares the similarity calculation result with a preset threshold value to acquire a final verification result and determines whether the moire fringe identity card face photo and the selfie face photo belong to the same person or not.

In a case that the similarity exceeds the preset threshold value, it can be determined that the corresponding moire fringe identity card face photo and selfie face photo belong to the same person, that is, the face verification device determines that the face verification succeeds. In a case that the similarity does not exceed the preset threshold value, it can be determined that the corresponding moire fringe identity card face photo and selfie face photo do not belong to the same person, that is, the face verification device determines that the face verification fails.

In the embodiment, the generation of the moire fringe removal model may be implemented in a manner of combining existing image segmentation and image restoring instead. The generation of the "identity card face-selfie face" verification model may directly be implemented by using an existing high-dimensional characteristic method. The generation of the "moire fringe removed identity card face-selfie face" verification model may be implemented by using an existing transfer learning method. No specific descriptions are made herein.

According to the embodiment of the invention, a method of pre-processing the moire fringe identity card face photos and performing face verification model training based on the pre-processed moire fringe identity card face photos and the selfie face photos is adopted so that a high-accuracy "moire fringe identity card face photo-selfie face photo" verification algorithm can be acquired. In addition, the identity card face photos in the embodiment may also be other types of photos, such as passport face photos and social security card face photos. The examples listed herein are not intended to limit the embodiment of the invention.

According to the face verification method provided by the embodiment of the invention, the moire fringe removal operation is automatically performed on a moire fringe face image to be verified by using the preset moire fringe removal model to acquire a moire fringe removed face image; then, characteristic extraction is performed on the moire fringe removed face image and an initial face image by using the preset moire fringe removed face verification model to acquire a moire fringe removed face characteristic and an initial face characteristic respectively; and finally, face verification is performed on the moire fringe removed face image and the initial face image based on the moire fringe removed face characteristic and the initial face characteristic. That is, according to the embodiment of the application, invention, automatic processing analysis is performed on the moire fringe face image to be verified and the initial face image according to the pretrained moire fringe removal model and moire fringe removed face verification model. By virtue of this solution, whether the moire fringe face image and the initial face image belong to the same person or not can be automatically judged without manual operations of a professional, so that face verification efficiency and accuracy can be improved.

### Third embodiment

For better implementing the face verification method provided by the embodiments of the application, this embodiment of the application provides a device based on the face verification method. Meanings of nouns used in the embodiment are the same as those in the face verification method. Specific implementation details may refer to descriptions in the method embodiments.

FIG. 3a is a structure diagram illustrating a face verification device according to an embodiment of the invention.

The face verification device includes an acquisition 301, a first moire fringe removal unit 302, a characteristic extraction unit 303 and a verification unit 304.

The acquisition unit 301 is configured to acquire a moire fringe face image to be verified and an initial face image. The first moire fringe removal unit 302 is configured to perform a moire fringe removal operation on the moire fringe face image acquired by the acquisition unit 301 by using a preset moire fringe removal model to acquire a moire fringe removed face image.

As an implementation mode, the acquisition unit 301 acquires the moire fringe face image to be verified and the initial face image and then judge whether faces in the moire fringe face image and the initial face image belong to the same person or not to complete face verification.

In the embodiment of the invention, the moire fringe face image refers to a face photo added with a moire fringe watermark, for example, an identification photo such as an identity card face photo, a social security card face photo or a pass face photo. The initial face image refers to a face photo without any moire fringe watermark, for example, a face photo shot by a user.

The characteristic extraction unit 303 is configured to perform characteristic extraction on the moire fringe removed face image by using a preset moire fringe removed face verification model to acquire a moire fringe removed face characteristic, and perform characteristic extraction on the initial face image by using the preset moire fringe removed face verification model to acquire an initial face characteristic. The verification unit 304 is configured to perform face characteristic on the moire fringe removed face image and the initial face image based on the moire fringe removed face characteristic and the initial face characteristic.

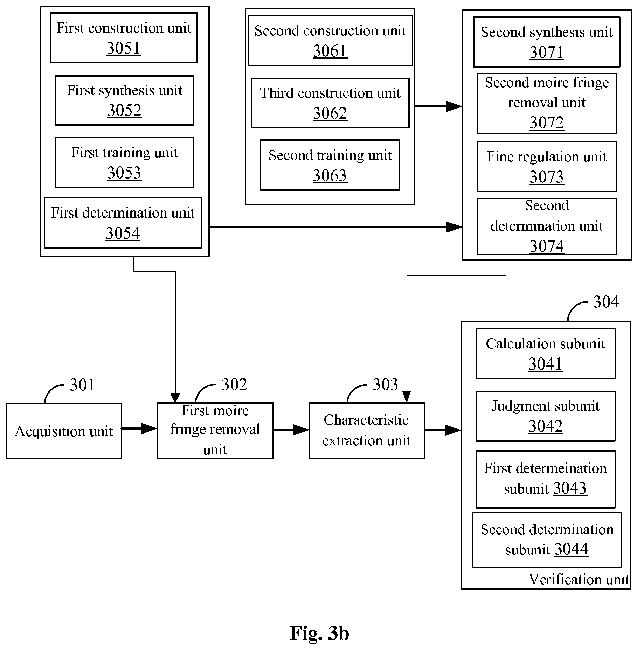

In the embodiment of the invention, before the moire fringe face image to be verified and the initial face image are acquired, the preset moire fringe removal model is generated. FIG. 3b is another structure diagram illustrating the face verification device. The face verification device may further include:
a first construction unit 3051, first synthesis unit 3052, first training unit 3053 and first determination unit 3054, which may be used to generate the preset moire fringe removal model.

The first construction unit 3051 may be configured to acquire first-type face images and construct a first face data collection according to the first-type face images. The first synthesis unit 3052 may be configured to perform synthesizing on the first face data collection based on one or more preset moire fringe watermarks to acquire a first moire fringe face data collection.

The first training unit 3053 may be configured to perform moire fringe removal CNN training based on the first face data collection and the first moire fringe face data collection to generate a moire fringe removal model. The first determination unit 3054 may be configured to determine the generated moire fringe removal model as the preset moire fringe removal model.

As an implementation mode, the first construction unit 3051 may acquire multiple face photos, determine the multiple acquired face photos as the first-type face images, construct the first face data collection according to the first-type face images and record the first face data collection in a preset memory for calling.

The first synthesis unit 3052 may perform synthesizing on the first-type face images in the first face data collection based on one or more preset moire fringe watermarks, namely adding the one or more moire fringe watermarks onto the first-type face images, thereby acquiring the first moire fringe face data collection. Then, the first training unit 3053 performs moire fringe removal CNN training based on the first face data collection and the first moire fringe face data collection, thereby generating the moire fringe removal model.

A moire fringe removal CNN may include a convolution layer, a batch_normalization layer, a deconvolution layer and the like. In the embodiment of the application, an optimization purpose of moire fringe removal CNN training is to make a sum of absolute values of differences between pixel values of the face photos from which moire fringes are removed and corresponding original face photos minimum.

Specific definitions about the convolution layer, the batch_normalization layer and the deconvolution layer and a training manner of the moire fringe removal CNN may be implemented with reference to an existing deep neural network training framework and will not be specifically described herein.

It is important to note that descriptions with terms "first", "second", "third" and the like in the embodiments of the application are adopted not to represent a logical relationship, sequential relationship or the like between photos of each type but only to distinguish the photos of each type in the specification.

As an implementation mode, the face verification device may generate the moire fringe removed face verification model and store the moire fringe removed face verification model in the memory in advance, and after the moire fringe removal operation is performed on the moire fringe face image to be verified to acquire the moire fringe removed face image, calls the preset moire fringe removed face verification model to perform characteristic extraction on the moire fringe removed face image and the initial face image respectively, thereby acquiring the moire fringe removed face characteristic and the initial face characteristic.

In the embodiment of the invention, characteristic extraction is a concept in computer vision and image processing. The characteristic extraction refers to extracting image information with a computer and determining whether each point of an image belongs to the same image characteristic or not. A characteristic extraction result is to divide the points on the image into different subsets, and these subsets usually include isolated points, continuous curves or continuous regions, so that the face verification device may perform comparison and judgment according to the characteristic extraction result.

In the embodiment of the invention, before acquiring the moire fringe face image to be verified and the initial face image, the face verification device generates a first face verification model, thereby generating the preset moire fringe removed face verification model according to the first face verification model. As shown in FIG. 3b, the face verification device further includes: a second construction unit 3061, third construction unit 3062 and second training unit 3063, which is configured to generate a first face verification model.

The second construction unit 3061 is configured to acquire second-type face images and construct a second face data collection according to the second-type face images.

The third construction unit 3062 is configured to acquire third-type face images corresponding to the second face data collection and construct a third face data collection according to the third-type face images. The second training unit 3063 is configured to perform face verification CNN training based on the second face data collection and the third face data collection to generate a first face verification model.

As an implementation mode, the second construction unit 3061 acquires multiple face photos, determines the multiple acquired face photos as the second-type face images, constructs the second face data collection according to the second-type face images and records the second face data collection in the preset memory for calling.

In the embodiment of the invention, the first-type face images and the second-type face images may all be identity card face photos. However, the first-type face images are different from the second-type face images. For example, in a case that an identity card face photo A is a first-type face image, the identity card face photo A is not a second-type face image. That is, the face images in the first face data collection and the second face data collection are not duplicated.

The operation that the third construction unit 3062 acquires the third-type face images corresponding to the second-type face images may be implemented in the following manner. Selfie face photos (i.e., the third-type face images) corresponding to identity card face photos (i.e., the second-type face images in the second face data collection) are acquired, and a data collection of the selfie face photos is constructed according to the selfie face photos.

Then, the third construction unit 3062 performs face verification CNN training based on the second face data collection and the third face data collection so as to generate a first face verification model, and generates the preset moire fringe removed face verification model according to the first face verification mode. As shown in FIG. 3b, the face verification device further includes: a second synthesis unit 3071, second moire fringe removal unit 3072, fine regulation unit 3073 and second determination unit 3074, which may be configured to generate the preset moire fringe removed face verification model.

The second synthesis unit 3071 is configured to perform synthesizing on the second face data collection based on one or more preset moire fringe watermarks to acquire a second moire fringe face data collection. The second moire fringe removal unit 3072 is configured to perform the moire fringe removal operation on each image in the second moire fringe face data collection by using the moire fringe removal model to generate a moire fringe removed face data collection.

The fine regulation unit 3073 is configured to perform network fine-tuning on the first face verification model according to the moire fringe removed face data collection and the third face data collection to generate a second face verification model. The second determination unit 3074 is configured to determine the second face verification model as the preset moire fringe removed face verification model.

As an implementation mode, the second synthesis unit 3071 adds one or more moire fringe watermarks to the second-type face images in the acquired second face data collection based on the one or more preset moire fringe watermarks, thereby acquiring the second moire fringe face data collection. The second moire fringe removal unit 3072 then performs the moire fringe removal operation on each image in the second moire fringe face data collection by using the acquired moire fringe removal model. The fine regulation unit 3073 finally performs network fine-tuning on the acquired first face verification model according to the moire fringe removed face data collection and the third face data collection, thereby generating the second face verification model. The second determination unit 3074 determines the second face verification model as the preset moire fringe removed face verification model.

In the embodiment, the first face verification model may be embodied as a "second-type face-third-type face" verification model, for example, an "identity card face-selfie face" verification model; and the second face verification model may be embodied as a "moire fringe removed face-third-type face" verification model, for example, a "moire fringe removed identity card face-selfie face" verification model.

A face verification CNN may be implemented with reference to an existing face verification algorithm using a deep neural network, a training manner of the CNN may be implemented with reference to an existing deep neural network training framework and they will not be specifically described herein.

The verification unit 304 may include:
a calculation subunit 3041, configured to calculate a similarity between the moire fringe removed face characteristic and the initial face characteristic to acquire a similarity value; a judgment subunit 3042, configured to judge whether the moire fringe removed face image and the initial face image belong to the same person or not based on the similarity value;
a first determination subunit 3043, configured to, in a case that a judgment result indicates that the moire fringe removed face image and the initial face image belong to the same person, determine that the face verification succeeds; and a second determination subunit 3044, configured to, in a case that a judgment result indicates that the moire fringe removed face image and the initial face image do not belong to the same person, determine that the face verification fails.

As an implementation mode, the calculation subunit 3041 may perform characteristic distance calculation on the moire fringe removed face characteristic and the initial face characteristic to acquire the similarity between the moire fringe removed face characteristic and the initial face characteristic.

The judgment subunit 3042 is configured to, in a case that the similarity value exceeds a preset threshold value, determine that the moire fringe removed face image and the initial face image belong to the same person, and in a case that the similarity value does not exceed the preset threshold value, determine that the moire fringe removed face image and the initial face image do not belong to the same person.

In some implementation modes, the calculation subunit 3041 may be configured to: calculate the similarity between the moire fringe removed face characteristic and the initial face characteristic by using any algorithm in a Euclidean distance algorithm, a cos distance algorithm, a joint Bayesian algorithm and a metric learning algorithm.

In a case that the similarity value exceeds the preset threshold value, it is determined that the moire fringe removed face image and the initial face image belong to the same person, that is, the face verification device determines that the face verification succeeds. In a case that the similarity value does not exceed the preset threshold value, it is determined that the moire fringe removed face image and the initial face image do not belong to the same person, that is, the face verification device determines that the face verification fails.

During exemplary implementation, each of the abovementioned units may be implemented as an independent entity and may also be freely combined for implementation as the same or a plurality of entities. Exemplary implementation of each of the abovementioned units may refer to the method embodiment and will not be elaborated herein.

The face verification device may be integrated in network equipment such as a server.

According to the face verification device provided by the embodiment of the application, the moire fringe removal operation is automatically performed on the moire fringe face image to be verified by using the preset moire fringe removal model to acquire the moire fringe removed face image; then, characteristic extraction is performed on the moire fringe removed face image and the initial face image by using the preset moire fringe removed face verification model to acquire the moire fringe removed face characteristic and the initial face characteristic respectively; and finally, face verification is performed on the moire fringe removed face image and the initial face image based on the moire fringe removed face characteristic and the initial face characteristic. That is, according to the embodiment of the application, automatic processing analysis is performed on the moire fringe face image to be verified and the initial face image according to the pretrained moire fringe removal model and moire fringe removed face verification model. By virtue of this solution, whether the moire fringe face image and the initial face image belong to the same person or not can be automatically judged without manual operations of a professional, so that face verification efficiency and accuracy can be improved.

In the embodiment of the invention, each of the acquisition unit 301, first moire fringe removal unit 302, characteristic extraction unit 303, verification unit 304, first construction unit 3051, first synthesis unit 3052, first training unit 3053, first determination unit 3054, second construction unit 3061, third construction unit 3062, second training unit 3063, second synthesis unit 3071, second moire fringe removal unit 3072, fine regulation unit 3073 and second determination unit 3074 in the face verification device may be implemented by a Central Processing Unit (CPU), a Digital Signal Processor (DSP), Microcontroller Unit (MCU) or Field-Programmable Gate Array (FPGA) during a practical application.

### Fourth embodiment

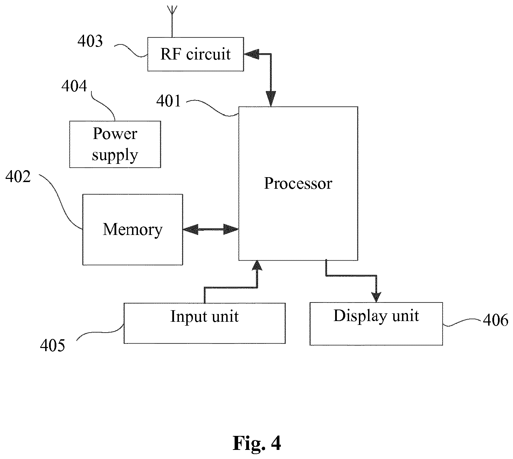

The embodiment of the application provides a face verification device. During a practical application, the face verification device may be implemented by a server. FIG. 4 is a structure diagram illustrating a server according to an embodiment of the application. The server includes: a processor 401 and a memory 402 storing data of an instruction executable for the processor 401. When executing the instruction, the processor 401 is configured to:
acquire a moire fringe face image to be verified and an initial face image;
perform a moire fringe removal operation on the moire fringe face image by using a preset moire fringe removal model to acquire a moire fringe removed face image;
perform characteristic extraction on the moire fringe removed face image by using a preset moire fringe removed face verification model to acquire a moire fringe removed face characteristic, and perform characteristic extraction on the initial face image by using the preset moire fringe removed face verification model to acquire an initial face characteristic; and
perform face verification on the moire fringe removed face image and the initial face image based on the moire fringe removed face characteristic and the initial face characteristic.

The server may include parts such as a processor 401 with one or more than one processing core, a memory 402 with one or more than one computer-readable storage medium, a Radio Frequency (RF) circuit 403, a power supply 404, an input unit 405 and a display unit 406. Those skilled in the art should know that the server structure shown in FIG. 4 is not intended to limit the server and the server may include more or fewer parts than those shown in the figure, or some parts may be combined, or different part layouts may be adopted.

The processor 401 is a control center of the server, connects each part of the whole server by using various interfaces and lines and executes various functions and data processing of the server by operating or executing a software program and/or module stored in the memory 402 and calling data stored in the memory 402, thereby monitoring the whole server. As an implementation mode, the processor 401 may include one or more processing cores. For example, the processor 401 may integrate an application processor and a modulation and demodulation processor, wherein the application processor mainly processes an operating system, a user interface, an application program and the like, and the modulation and demodulation processor mainly processes wireless communication. The modulation and demodulation processor may also not be integrated into the processor 401.

The memory 402 may be configured to store software program and modules. The processor 401 may run the software program and modules stored in the memory 402, thereby executing various function applications and data processing. The memory 502 may include a program storage region and a data storage region, wherein the program storage region may store content such as an operating system, or the application program required by at least one function (for example, a sound playing function and/or an image playing function), and the data storage region may store data created according to use of the server. The memory 402 may include a high-speed random access memory, and may also include a non-volatile memory, for example, at least one disk storage device, a flash device or other volatile solid-state storage device. Correspondingly, the memory 402 may further include a memory controller for access of the processor 401 to the memory 402.

The RF circuit 403 may be configured to receive and send signals in an information receiving and sending process. After receiving downlink information of a base station, the RF circuit 403 may send the downlink information to one or more processors 401 for processing. In addition, the RF circuit 403 may send uplink data to the base station. The RF circuit 403 may include, but not limited to, an antenna, at least one amplifier, a tuner, one or more oscillator, a Subscriber Identity Module (SIM) card, a transceiver, a coupler, a Low Noise Amplifier (LNA), a duplexer and the like. In addition, the RF circuit 403 may also communicate with a network and other equipment in a wireless communication manner. Any communication or protocol may be used for wireless communication, including, but not limited to, a Global System of Mobile communication (GSM), General Packet Radio Service (GPRS), Code Division Multiple Access (CDMA), Wideband Code Division Multiple Access (WCDMA), Long Term Evolution (LTE), an electronic mail, Short Messaging Service (SMS) and the like.

The server may further include power supply 404 (for example, a battery) supplying power to each part. As an implementation mode, the power supply may be logically connected with the processor 401 through a power management system, thereby realizing functions of charging and discharging management, power consumption management and the like through the power management system. The power supply 404 may further include one or more components, such as a direct current or alternating current power supply, a rechargeable system, a power failure detection circuit, a power converter or inverter and a power state indicator.

The server may further include the input unit 405, and the input unit 405 may be configured to receive input digital or character information and generate related keyboard, mouse, joystick, optical or trackball signal input related to user setting and function control.

The server may further include the display unit 406, and the display unit 406 may be configured to display information input by a user or information provided for the user and various graphic user interfaces of the server, and these graphic user interfaces may be formed by a graph, a text, an icon, a video and any combination thereof. The display unit 406 may include a display panel. As an implementation mode, the display panel may be configured in form of a Liquid Crystal Display (LCD), an Organic Light-Emitting Diode (OLED) and the like.

In the embodiment, the processor 401 in the server may load an executable file corresponding to a process of one or more than one application program into the memory 402 according to the following instruction. The processor 401 may run the application program stored in the memory 402, thereby realizing various functions as follows:
acquiring a moire fringe face image to be verified and an initial face image; performing a moire fringe removal operation on the moire fringe face image by using a preset moire fringe removal model to acquire a moire fringe removed face image; performing characteristic extraction on the moire fringe removed face image by using a preset moire fringe removed face verification model to acquire a moire fringe removed face characteristic, and performing characteristic extraction on the initial face image by using the preset moire fringe removed face verification model to acquire an initial face characteristic; and performing face verification on the moire fringe removed face image and the initial face image based on the moire fringe removed face characteristic and the initial face characteristic.

As an implementation mode, the processor 401 may be further configured to: acquire first-type face images and construct a first face data collection according to the first-type face images; perform synthesizing on the first face data collection based on one or more preset moire fringe watermarks to acquire a first moire fringe face data collection; perform moire fringe removal CNN training based on the first face data collection and the first moire fringe face data collection to generate a moire fringe removal model; and determine the generated moire fringe removal model as the preset moire fringe removal model.

As an implementation mode, the processor 401 may be further configured to: acquire second-type face images and construct a second face data collection according to the second-type face images; acquire third-type face images corresponding to the second face data collection and construct a third face data collection according to the third-type face images; and perform face verification CNN training based on the second face data collection and the third face data collection to generate a first face verification model.

As an implementation mode, the processor 401 may be further configured to: perform synthesizing on the second-type face data collection based on one or more preset moire fringe watermarks to acquire a second moire fringe face data collection; perform the moire fringe removal operation on each image in the second moire fringe face data collection by using the moire fringe removal model to generate a moire fringe removed face data collection; perform network fine-tuning on the first face verification model according to the moire fringe removed face data collection and the third face data collection to generate a second face verification model; and determine the second face verification model as the preset moire fringe removed face verification model.

As an implementation mode, the processor 401 may be further configured to: calculate a similarity between the moire fringe removed face characteristic and the initial face characteristic to acquire a similarity value; judge whether the moire fringe removed face image and the initial face image belong to the same person or not based on the similarity value; in a case that a judgment result indicates that the moire fringe removed face image and the initial face image belong to the same person, determine that the face verification succeeds; and in a case that a judgment result indicates that the moire fringe removed face image and the initial face image do not belong to the same person, determine that the face verification fails.

As an implementation mode, the processor 401 may be further configured to: in a case that the similarity value exceeds a preset threshold value, determine that the moire fringe removed face image and the initial face image belong to the same person; and in a case that the similarity value does not exceed the preset threshold value, determine that the moire fringe removed face image and the initial face image do not belong to the same person.

In an implementation mode, the processor 401 may be further configured to: calculate the similarity between the moire fringe removed face characteristic and the initial face characteristic by using any algorithm in a Euclidean distance algorithm, a cos distance algorithm, a joint Bayesian algorithm and a metric learning algorithm.

In the server provided by the embodiment of the invention, the moire fringe removal operation is automatically performed on the moire fringe face image to be verified by using the preset moire fringe removal model to acquire the moire fringe removed face image; then, characteristic extraction is performed on the moire fringe removed face image and the initial face image by using the preset moire fringe removed face verification model to acquire the moire fringe removed face characteristic and the initial face characteristic respectively; and finally, face verification is performed on the moire fringe removed face image and the initial face image based on the moire fringe removed face characteristic and the initial face characteristic. That is, according to the embodiment of the application, automatic processing analysis can be performed on the moire fringe face image to be verified and the initial face image according to the pretrained moire fringe removal model and moire fringe removed face verification model. By virtue of this solution, whether the moire fringe face image and the initial face image belong to the same person or not can be automatically judged without manual operations of a professional, so that face verification efficiency and accuracy can be improved.

Each embodiment in the embodiments is described with different emphases, and parts which are not elaborated in a certain embodiment may refer to detailed descriptions made to the face verification method above and will not be elaborated herein.

The face verification device provided by the embodiment of the invention is, for example, a computer, a tablet computer or a mobile phone with a touch function. The face verification device and the face verification method in the abovementioned embodiment follow the same concept, any method provided in the embodiment of the face verification method may be operated on the face verification device, and details about an exemplary implementation process of the face verification device may refer to the embodiment of the face verification method and will not be elaborated herein.

In some embodiments provided by the invention, the disclosed method and device may be implemented in other manners. The device embodiments described above are only exemplary embodiments, for example, in the device embodiments the division of the modules is based on their respective logic functions, however, it should be understood that other division manners may be adopted during practical implementation. For example, multiple modules or components may be combined, or may be integrated into another system, or some characteristics may be omitted or not executed. In addition, communication connection between each displayed or discussed component may be indirect coupling or communication connection, implemented through some interfaces, of the equipment or the modules, and may be electrical and mechanical or adopt other forms.

The modules described as separate parts may or may not be physically separated. Parts displayed as modules may or may not be physical modules, and they may be located in the same place, or may also be distributed to multiple network modules. Part or all of the modules may be selected to achieve the purpose of the solutions of the embodiments according to a practical requirement.

In addition, each function module in each embodiment of the application may be integrated into a processing module, or each module may exist independently, or two or more than two modules may be integrated into one module. The integrated module may be implemented in a hardware form, and may alternatively be implemented in the form of combination of hardware and software function module.

Those of ordinary skilled in the art should know that all or part of the steps implementing the method embodiments may be completed through hardware related to program instructions. The program may be stored in a computer-readable storage medium. When the program is executed, the steps of the method embodiment are executed. The storage medium may include various media capable of storing program codes, such as mobile storage equipment, a Read-Only Memory (ROM), a magnetic disk or an optical disk.

Alternatively, when being implemented in the form of software function module and sold or used as an independent product, the integrated module of the embodiment of the invention may also be stored in a computer-readable storage medium. Based on such an understanding, the technical solutions of the embodiments of the invention substantially or partially making contributions to the related art may be embodied in the form of software product. The computer software product may be stored in a storage medium, including a plurality of instructions configured to enable computer equipment (which may be a personal computer, a server, network equipment or the like) to execute all or part of the method in each embodiment of the application. The storage medium may include various media capable of storing program codes, such as a mobile storage device, a ROM, a magnetic disk or an optical disk.

The face verification method and device recorded in the embodiments of the invention only take the abovementioned embodiments as examples and are not limited thereto. Those of ordinary skilled in the art should know that the technical solutions recorded in each embodiment may be modified, or part or all of technical characteristics therein may also be equivalently replaced.

The above is only exemplary embodiments of the invention and not intended to limit the scope of protection of the invention. The scope of protection of the current invention is provided by the appended claims.

### Industrial Applicability

According to the technical solutions of the embodiments of the invention, automatic processing analysis is performed on the moire fringe face image to be verified and the initial face image according to the pretrained moire fringe removal model and moire fringe removed face verification model. By virtue of this solution, whether the moire fringe face image and the initial face image belong to the same person or not can be automatically judged without manual operations of a professional, so that face verification efficiency and accuracy can be improved.

## Claims

1. A computer-implemented face verification method, comprising:
acquiring a moire fringe face image to be verified and an initial face image, wherein the moire fringe face image is an identification photo in which a moire fringe watermark has been added, and the initial face image is a face photo shot by a user without any moire fringe watermark;
performing a moire fringe removal operation on the moire fringe face image by using a preset moire fringe removal model to acquire a moire fringe removed face image, wherein before the moire fringe face image to be verified and the initial face image are acquired, the preset moire fringe removal model is generated;
performing characteristic extraction on the moire fringe removed face image by using a preset moire fringe removed face verification model to acquire a moire fringe removed face characteristic, and performing characteristic extraction on the initial face image by using the preset moire fringe removed face verification model to acquire an initial face characteristic, wherein before acquiring the moire fringe face image to be verified and the initial face image, a first face verification model is generated, thereby generating the preset moire fringe removed face verification model according to the first face verification model; and
performing face verification on the moire fringe removed face image and the initial face image based on the moire fringe removed face characteristic and the initial face characteristic, wherein
the first face verification model is generated by a second construction unit (3061) that acquires second-type face images and constructs a second face data collection according to the second-type face images, a third construction unit (3062) that acquires third-type face images corresponding to the second face data collection and constructs a third face data collection according to the third-type face images, and a second training unit (3063) that performs face verification Convolutional Neural Network, CNN, training based on the second face data collection and the third face data collection to generate the first face verification model, wherein the second-type face images are identity card face photos and the third-type face images are selfie photos corresponding to the second-type face images, wherein
network fine tuning is performed on the first face verification model according to a moire fringe removed face data collection and the third face data collection, thereby generating the preset moire fringe removed face verification model, wherein synthesizing on the second face data collection based on one or more preset moire fringe watermarks is performed to acquire a second moire fringe face data collection, and the moire fringe removal operation is performed on each image in the second moire fringe face data collection by using the moire fringe removal model to generate the moire fringe removed face data collection.

2. The face verification method as claimed in claim 1, wherein performing face verification on the moire fringe removed face image and the initial face image based on the moire fringe removed face characteristic and the initial face characteristic comprises:
calculating a similarity between the moire fringe removed face characteristic and the initial face characteristic to acquire a similarity value;
judging whether the moire fringe removed face image and the initial face image belong to the same person or not based on the similarity value;
in a case that a judgment result indicates that the moire fringe removed face image and the initial face image belong to the same person, determining that the face verification succeeds; and
in a case that a judgment result indicates that the moire fringe removed face image and the initial face image do not belong to the same person, determining that the face verification falls.

3. The face verification method as claimed in claim 2, wherein judging whether the moire fringe removed face image and the initial face image belong to the same person or not based on the similarity value comprises:
in a case that the similarity value exceeds a preset threshold value, determining that the moire fringe removed face image and the initial face image belong to the same person; and
in a case that the similarity value does not exceed the preset threshold value, determining that the moire fringe removed face Image and the Initial face Image do not belong to the same person.

4. The face verification method as claimed in claim 2, wherein calculating the similarity between the moire fringe removed face characteristic and the initial face characteristic comprises:
calculating the similarity between the moire fringe removed face characteristic and the initial face characteristic by using any algorithm in a Euclidean distance algorithm, a Cosine distance algorithm, a joint Bayesian algorithm and a metric learning algorithm.

5. A face verification device, comprising: a processor and a memory storing data of an instruction executable for the processor, the processor, when executing the instruction, being configured to:
acquire a moire fringe face image to be verified and an initial face image, wherein the moire fringe face image is an identification photo in which a moire fringe watermark has been added, and the initial face image is a face photo shot by a user without any moire fringe watermark;
perform a moire fringe removal operation on the moire fringe face image by using a preset moire fringe removal model to acquire a moire fringe removed face image, wherein before the moire fringe face image to be verified and the initial face image are acquired, the preset moire fringe removal model is generated;
perform characteristic extraction on the moire fringe removed face image by using a preset moire fringe removed face verification model to acquire a moire fringe removed face characteristic, and perform characteristic extraction on the initial face image by using the preset moire fringe removed face verification model to acquire an initial face characteristic, wherein before acquiring the moire fringe face image to be verified and the initial face image, a first face verification model is generated, thereby generating the preset moire fringe removed face verification model according to the first face verification model; and
perform face verification on the moire fringe removed face image and the initial face image based on the moire fringe removed face characteristic and the initial face characteristic, wherein
the face verification device further comprises a second construction unit (3061), a third construction unit (3062) and a second training unit (3063) that are configured to generate the first face verification model, wherein the second construction unit (3061) is configured to acquire second-type face images and construct a second face data collection according to the second-type face images, the third construction unit (3062) is configured to acquire third-type face images corresponding to the second face data collection and construct a third face data collection according to the third-type face images, and the second training unit (3063) is configured to perform face verification Convolutional Neural Network, CNN, training based on the second face data collection and the third face data collection to generate the first face verification model, wherein the second-type face images are identity card face photos and the third-type face images are selfie photos corresponding to the second-type face images, wherein
network fine tuning is performed on the first face verification model according to a moire fringe removed face data collection and the third face data collection, thereby generating the preset moire fringe removed face verification model, wherein synthesizing on the second face data collection based on one or more preset moire fringe watermarks is performed to acquire a second moire fringe face data collection, and the moire fringe removal operation is performed on each image in the second moire fringe face data collection by using the moire fringe removal model to generate the moire fringe removed face data collection.

6. The face verification device as claimed in claim 5, wherein the processor Is further configured to calculate a similarity between the moire fringe removed face characteristic and the initial face characteristic to acquire a similarity value; judge whether the moire fringe removed face image and the initial face image belong to the same person or not based on the similarity value; in a case that a judgment result indicates that the moire fringe removed face image and the initial face image belong to the same person, determine that the face verification succeeds; and in a case that a judgment result indicates that the moire fringe removed face image and the initial face image do not belong to the same person, determine that the face verification fails.

7. The face verification device as claimed in claim 6, wherein the processor is configured to:
in a case that the similarity value exceeds a preset threshold value, determine that the moire fringe removed face image and the initial face image belong to the same person; and
in a case that the similarity value does not exceed the preset threshold value, determine that the moire fringe removed face image and the initial face image do not belong to the same person.

8. A computer storage medium, in which a computer-executable instruction is stored, the computer-executable instruction being configured to execute the face verification method as claimed in any one of claims 1-4.

## Patentansprüche

1. Ein computer-implementiertes Verfahren zur Gesichtsverifizierung, das umfasst:
Erfassen eines zu überprüfenden Moirestreifen-Gesichtsbildes und eines Ausgangsgesichtsbildes, wobei das Moiréstreifen-Gesichtsbild ein Identifikationsfoto ist, dem ein Moirestreifen-Wasserzeichen zugegeben wurde, und das Ausgangsgesichtsbild ein von einem Benutzer aufgenommenes Gesichtsfoto ohne Moirestreifen-Wasserzeichen ist;
Durchführung einer Moirestreifen-Entfernungsoperation auf dem Moiréstreifen-Gesichtsbild durch Anwenden eines voreingestellten Modells zur Entfernung von Moiréstreifen, um ein Gesichtsbild mit entfernten Moiréstreifen zu erfassen, wobei das voreingestellte Modell zur Entfernung von Moiréstreifen erzeugt wird, bevor das zu verifizierende Moirestreifen-Gesichtsbild und das Ausgangsgesichtsbild erfasst werden;
Durchführen einer Merkmalsextraktion an dem Gesichtsbild mit entfernten Moirestreifen durch Anwenden eines voreingestellten Modells zur Verifizierung von von Moirestreifen befreiten Gesichtern, um eine von Moirestreifen befreite Gesichtscharakteristik zu erhalten, und Durchführen einer Merkmalsextraktion an dem Ausgangsgesichtsbild durch Anwenden des voreingestellten Modells zur Verifizierung von von Moiréstreifen befreiten Gesichtern, um eine anfängliche Gesichtscharakteristik zu erhalten, wobei vor dem Erhalten des zu verifizierenden Moirestreifen-Gesichtsbildes und des Ausgangsgesichtsbildes ein erstes Gesichtsverifizierungsmodell erzeugt wird, wodurch das voreingestellte Modell zur Verifizierung von von Moiréstreifen befreiten Gesichtern gemäß dem ersten Gesichtsverifizierungsmodell erzeugt wird; und
Durchführen einer Gesichtsverifizierung an dem Gesichtsbild mit entfernten Moiréstreifen und dem Ausgangsgesichtsbild auf der Grundlage der von Moiréstreifen befreiten Gesichtscharakteristik und der anfänglichen Gesichtscharakteristik, wobei
das erste Gesichtsverifizierungsmodell durch eine zweite Konstruktionseinheit (3061) erzeugt wird, die Gesichtsbilder eines zweiten Typs erfasst und eine zweite Gesichtsdatensammlung entsprechend den Gesichtsbildern des zweiten Typs konstruiert, eine dritte Konstruktionseinheit (3062), die Gesichtsbilder eines dritten Typs entsprechend der zweiten Gesichtsdatensammlung erfasst und eine dritte Gesichtsdatensammlung entsprechend den Gesichtsbildern des dritten Typs konstruiert, und eine zweite Trainingseinheit (3063), die auf der Grundlage der zweiten Gesichtsdatensammlung und der dritten Gesichtsdatensammlung ein Convolutional Neural Network, CNN, Training zur Gesichtsverifizierung durchführt, um das erste Gesichtsverifizierungsmodell zu erzeugen, wobei die Gesichtsbilder des zweiten Typs Ausweisgesichtsfotos sind und die Gesichtsbilder des dritten Typs Selfie-Fotos sind, die den Gesichtsbildern des zweiten Typs entsprechen, wobei
Netzwerk-Feinabstimmung an dem ersten Gesichtsverifizierungsmodell gemäß einer Gesichtsdatensammlung mit entfernten Moirestreifen und der dritten Gesichtsdatensammlung durchgeführt wird, wodurch das voreingestellte Modell zur Verifizierung von von Moirestreifen befreiten Gesichtern erzeugt wird, wobei Synthetisieren an der zweiten Gesichtsdatensammlung auf der Grundlage eines oder mehrerer voreingestellter Moiréstreifen-Wasserzeichen durchgeführt wird, um eine zweite Gesichtsdatensammlung mit Moiréstreifen zu erhalten, und der Moiréstreifen-Entfernungsvorgang an jedem Bild in der zweiten Gesichtsdatensammlung mit Moiréstreifen unter Anwendung des Modells zur Entfernung von Moiréstreifen durchgeführt wird, um die Gesichtsdatensammlung mit entfernten Moiréstreifen zu erzeugen.

2. Verfahren zur Gesichtsverifizierung nach Anspruch 1, wobei das Durchführen der Gesichtsverifizierung an dem von Moiréstreifen befreiten Gesichtsbild und dem Ausgangsgesichtsbild auf der Grundlage der von Moiréstreifen befreiten Gesichtscharakteristik und der anfänglichen Gesichtscharakteristik umfasst:
Berechnen einer Ähnlichkeit zwischen der von Moiréstreifen befreiten Gesichtscharakteristik und der anfänglichen Gesichtscharakteristik, um einen Ähnlichkeitswert zu erhalten;
Beurteilen, ob das von Moiréstreifen befreite Gesichtsbild und das anfängliche Gesichtsbild zu derselben Person gehören oder nicht, basierend auf dem Ähnlichkeitswert;
in einem Fall, in dem ein Beurteilungsergebnis anzeigt, dass das von Moirestreifen befreite Gesichtsbild und das anfängliche Gesichtsbild zu derselben Person gehören, Feststellen, dass die Gesichtsverifizierung erfolgreich war; und
in einem Fall, in dem ein Beurteilungsergebnis anzeigt, dass das von Moirestreifen befreite Gesichtsbild und das anfänglichen Gesichtsbild nicht zu derselben Person gehören, Feststellen, dass die Gesichtsverifizierung fehlschlägt.

3. Verfahren zur Gesichtsverifizierung nach Anspruch 2, wobei die Beurteilung, ob das von Moiréstreifen befreite Gesichtsbild und das anfängliche Gesichtsbild zu derselben Person gehören oder nicht, basierend auf dem Ähnlichkeitswert umfasst:
in einem Fall, in dem der Ähnlichkeitswert einen voreingestellten Schwellenwert übersteigt, Feststellen, dass das von Moiréstreifen befreite Gesichtsbild und das anfängliche Gesichtsbild zu der gleichen Person gehören; und
für den Fall, dass der Ähnlichkeitswert den voreingestellten Schwellenwert nicht überschreitet, Feststellen, dass das von Moiréstreifen befreite Gesichtsbild und das anfängliche Gesichtsbild nicht zu derselben Person gehören.

4. Verfahren zur Gesichtsverifizierung nach Anspruch 2, wobei das Berechnen der Ähnlichkeit zwischen dem von Moirestreifen befreitem Gesichtsbild und der anfänglichen Gesichtscharakteristik umfasst:
Berechnen der Ähnlichkeit zwischen dem von Moiréstreifen befreitem Gesichtsbild und dem anfänglichen Gesichtscharakteristik durch Anwendung eines beliebigen Algorithmus aus der Gruppe eines euklidischen Distanzalgorithmus, eines Cosinus-Distanzalgorithmus, eines gemeinsamen Bayes'schen Algorithmus und eines metrischen Lernalgorithmus.

5. Vorrichtung zur Gesichtsverifizierung, die umfasst: einen Prozessor und einen Speicher, der Daten eines für den Prozessor ausführbaren Befehls speichert, wobei der Prozessor bei der Ausführung des Befehls konfiguriert ist zum:
Erfassen eines zu verifizierenden Moirestreifen-Gesichtsbildes und eines Ausgangsgesichtsbildes, wobei das Moirestreifen-Gesichtsbild ein Identifikationsfoto ist, dem ein Moirestreifen-Wasserzeichen zugegeben wurde, und das Ausgangsgesichtsbild ein von einem Benutzer aufgenommenes Gesichtsfoto ohne Moirestreifen-Wasserzeichen ist;
Durchführen eine Moirestreifen-Entfernungsoperation auf dem Moiréstreifen-Gesichtsbild durch Anwenden eines voreingestellten Modells zur Entfernung von Moiréstreifen, um ein Gesichtsbild mit entfernten Moiréstreifen zu erfassen, wobei das voreingestellte Modell zur Entfernung von Moiréstreifen erzeugt wird, bevor das zu verifizierende Moiréstreifen-Gesichtsbild und das anfängliche Gesichtsbild erfasst werden;
Durchführen einer Merkmalsextraktion an dem Gesichtsbild mit entfernten Moirestreifen durch Anwenden eines voreingestellten Modells zur Verifizierung von von Moirestreifen befreiten Gesichtern, um eine von Moirestreifen befreite Gesichtscharakteristik zu erhalten, und Durchführen einer Merkmalsextraktion an dem anfänglichen Gesichtsbild durch Anwenden des voreingestellten Modells zur Verifizierung von von Moiréstreifen befreiten Gesichtern, um eine anfängliche Gesichtscharakteristik zu erhalten, wobei vor dem Erhalten des zu verifizierenden Gesichtsbildes mit Moiréstreifen und des anfänglichen Gesichtsbildes ein erstes Gesichtsverifizierungsmodell erzeugt wird, wodurch das voreingestellte Modell zur Verifizierung von von Moiréstreifen befreiten Gesichtern gemäß dem ersten Gesichtsverifizierungsmodell erzeugt wird; und
Durchführen einer Gesichtsverifizierung auf dem von Moiréstreifen befreiten Gesichtsbild und dem anfänglichen Gesichtsbild auf der Grundlage der von Moirestreifen befreiten Gesichtseigenschaften und der anfänglichen Gesichtscharakteristik, wobei
die Vorrichtung zur Gesichtsverifizierung ferner eine zweite Konstruktionseinheit (3061), eine dritte Konstruktionseinheit (3062) und eine zweite Trainingseinheit (3063) umfasst, die konfiguriert sind, um das erste Gesichtsverifizierungsmodell zu erzeugen, wobei die zweite Konstruktionseinheit (3061) konfiguriert ist, um Gesichtsbilder eines zweiten Typs zu erfassen und eine zweite Gesichtsdatensammlung gemäß den Gesichtsbildern des zweiten Typs zu konstruieren, die dritte Konstruktionseinheit (3062) konfiguriert ist, um Gesichtsbilder eines dritten Typs zu erfassen, die der zweiten Gesichtsdatensammlung entsprechen, und eine dritte Gesichtsdatensammlung gemäß den Gesichtsbildern des dritten Typs zu konstruieren, und die zweite Trainingseinheit (3063) so konfiguriert ist, dass sie auf der Grundlage der zweiten Gesichtsdatensammlung und der dritten Gesichtsdatensammlung ein Convolutional Neural Network, CNN, Training zur Gesichtsverifizierung durchführt, um das erste Gesichtsverifizierungsmodell zu erzeugen, wobei die Gesichtsbilder des zweiten Typs Ausweisgesichtsfotos sind und die Gesichtsbilder des dritten Typs Selfie-Fotos sind, die den Gesichtsbildern des zweiten Typs entsprechen, wobei
Netzwerk-Feinabstimmung an dem ersten Gesichtsverifikationsmodell gemäß einer Gesichtsdatensammlung mit entfernten Moiréstreifen und der dritten Gesichtsdatensammlung durchgeführt wird, wodurch das voreingestellte Gesichtsverifikationsmodell mit entfernten Moiréstreifen erzeugt wird, wobei eine Synthese an der zweiten Gesichtsdatensammlung basierend auf einem oder mehreren voreingestellten Moirestreifen-Wasserzeichen durchgeführt wird, um eine zweite Moirestreifen-Gesichtsdatensammlung zu erhalten, und der Moirestreifen-Entfernungsvorgang an jedem Bild in der zweiten Moirestreifen-Gesichtsdatensammlung durch Anwendung des Moirestreifen-Entfernungsmodells durchgeführt wird, um die Moirestreifen-entfernte Gesichtsdatensammlung zu erzeugen.

6. Vorrichtung zur Gesichtsverifizierung nach Anspruch 5, wobei der Prozessor ferner so konfiguriert ist, dass er eine Ähnlichkeit zwischen dem von Moiréstreifen befreiten Gesichtsmerkmal und der anfänglichen Gesichtscharakteristik berechnet, um einen Ähnlichkeitswert zu erhalten; basierend auf dem Ähnlichkeitswert beurteilt, ob das von Moiréstreifen befreite Gesichtsbild und das anfängliche Gesichtsbild zu derselben Person gehören oder nicht; in einem Fall, in dem ein Beurteilungsergebnis anzeigt, dass das von Moiréstreifen entfernte Gesichtsbild und das anfängliche Gesichtsbild zu der gleichen Person gehören, bestimmt, dass die Gesichtsverifizierung erfolgreich ist; und in einem Fall, in dem ein Beurteilungsergebnis anzeigt, dass das von Moirestreifen entfernte Gesichtsbild und das anfängliche Gesichtsbild nicht zu der gleichen Person gehören, bestimmen, dass die Gesichtsverifizierung fehlschlägt.

7. Vorrichtung zur Gesichtsverifizierung nach Anspruch 6, wobei der Prozessor so konfiguriert ist, dass er:
in einem Fall, in dem der Ähnlichkeitswert einen voreingestellten Schwellenwert übersteigt, bestimmt, dass das von Moiréstreifen befreite Gesichtsbild und das anfängliche Gesichtsbild zu der gleichen Person gehören; und
für den Fall, dass der Ähnlichkeitswert den voreingestellten Schwellenwert nicht überschreitet, feststellt, dass das von Moiréstreifen befreite Gesichtsbild und das anfängliche Gesichtsbild nicht zu derselben Person gehören.

8. Computerspeichermedium, in dem ein computerausführbarer Befehl gespeichert ist, wobei der computerausführbare Befehl so konfiguriert ist, dass er das Gesichtsverifikationsverfahren nach einem der Ansprüche 1-4 ausführt.

## Revendications

1. Procédé de vérification faciale mis en oeuvre par ordinateur, comprenant:
l'acquisition d'une image de visage avec franges de moiré devant être vérifiée et une image de visage initiale, dans lequel l'image de visage avec franges de moiré est une photo d'identité dans laquelle un filigrane de frange de moiré a été ajouté, et l'image de visage initiale est une photo de visage prise par un utilisateur sans un quelconque filigrane de frange de moiré;
la réalisation d'une opération de retrait de frange de moiré sur l'image de visage avec franges de moiré
à l'aide d'un modèle de retrait de frange de moiré prédéfini pour acquérir une image de visage avec franges de moiré retiré, dans lequel avant que l'image de visage avec franges de moiré devant être vérifiée et l'image de visage initiale ne soient acquises, le modèle de retrait de frange de moiré est généré;
l'extraction de caractéristique sur l'image de visage avec franges de moiré retirées à l'aide d'un modèle de vérification faciale prédéfini avec franges de moiré retiré pour acquérir une caractéristique de visage avec franges de moiré retiré, et l'extraction de caractéristique sur l'image de visage initiale à l'aide d'un modèle de vérification faciale avec franges de moiré retiré pour acquérir une caractéristique de visage initiale, dans lequel avant l'acquisition de l'image de visage avec franges de moiré devant être vérifiée et l'image de visage initiale, un premier modèle de visage est généré, générant ainsi le modèle de vérification faciale avec franges de moiré retirées conformément au premier modèle de vérification faciale; et
la vérification faciale sur l'image de visage avec franges de moiré retirées et sur l'image de visage initiale en fonction de la caractéristique de visage avec franges de moiré retirées et de la caractéristique de visage initiale, dans lequel
le premier modèle de vérification faciale est généré par une seconde unité de construction (3061) qui acquiert des images de visage de second type et construit une seconde collecte de données de visage conformément aux images de visage de second type, une troisième unité de construction (3062) qui acquiert des images de troisième type correspondant à la seconde collecte de données de visage et construit une troisième collecte de données de visage conformément aux images de visage de troisième type, et une seconde unité d'entraînement (3063) qui réalise l'entraînement de réseau de neurones à convolution de vérification faciale, CNN, en fonction de la seconde collecte de données de visage et de la troisième collecte de données de visage pour générer le premier modèle de vérification faciale, dans lequel les images de visage de second type sont des photos de visage de carte d'identité et des images d'autophoto de troisième type correspondant aux images de visage de deuxième type, dans lequel
le réglage précis de réseau est effectué sur le premier modèle de vérification faciale conformément à une collecte de données de visage avec franges de moiré retirées et à la troisième collecte de données de visage, générant ainsi le modèle de vérification faciale prédéfini avec franges de moiré retirées, dans lequel la synthèse sur la seconde collecte de données de visage en fonction d'un ou plusieurs filigranes de frange de moiré prédéfinis est réalisée pour acquérir une seconde collecte de données de visage de frange de moiré, et l'opération de retrait de frange de moiré est effectuée sur chaque image dans la seconde collecte de données de visage avec franges de moiré à l'aide du modèle de retrait de frange de moiré pour générer la collecte de données de visage avec franges de moiré retirées.

2. Procédé de vérification faciale selon la revendication 1, dans lequel la vérification de visage sur l'image de visage avec franges de moiré retirées et sur l'image de visage initiale en fonction de la caractéristique de visage avec franges de moiré retirées et de la caractéristique de visage initiale comprend:
le calcul d'une similarité entre la caractéristique de visage avec franges de moiré retirées et la caractéristique de visage initiale pour acquérir une valeur de similarité;
le fait d'estimer si l'image de visage avec franges de moiré retirées et l'image initiale appartiennent à la même personne ou ne sont pas basées sur la valeur de similarité;
au cas où un résultat d'estimation indique que l'image de visage avec franges de moiré retirées et l'image initiale appartiennent à la même personne, la détermination que la vérification faciale a réussi; et
au cas où un résultat d'estimation indique que l'image de visage avec franges de moiré retirées et l'image initiale n'appartiennent pas à la même personne, la détermination que la vérification faciale a échoué.

3. Procédé de vérification faciale selon la revendication 2, dans lequel le fait d'estimer si l'image de visage avec franges de moiré retirées et l'image initiale appartiennent à la même personne ou ne sont pas basées sur la valeur de similarité comprend:
au cas où la valeur de similarité dépasse une valeur de seuil prédéfinie, la détermination que l'image de visage avec franges de moiré retirées et l'image de visage initiale appartiennent à la même personne; et
au cas où la valeur de similarité ne dépasse pas la valeur de seuil prédéfinie, la détermination que l'image de visage avec franges de moiré retirées et l'image de visage initiale n'appartiennent pas à la même personne.

4. Procédé de vérification faciale selon la revendication 2, dans lequel le calcul de la similarité entre la caractéristique de visage avec franges de moiré retirées et la caractéristique de visage initiale comprend:
le calcul de la similarité entre la caractéristique de visage avec franges de moiré retirées et la caractéristique de visage initiale à l'aide d'un quelconque algorithme dans un algorithme de distance euclidienne, un algorithme bayésien commun et un algorithme d'apprentissage de métrique.

5. Dispositif de vérification faciale comprenant: un processeur et une mémoire stockant des données d'une instruction exécutable pour le processeur, le processeur, lorsqu'il exécute l'instruction, est configuré pour:
l'acquisition d'une image de visage avec franges de moiré devant être vérifiée et d'une image de visage initiale, dans lequel l'image de visage avec franges de moiré est une photo d'identité dans laquelle un filigrane de franges de moiré a été ajouté, et l'image de visage initiale est une photo de visage prise par un utilisateur sans un quelconque filigrane de frange de moiré;
la réalisation d'une opération de retrait de franges de moiré sur l'image de visage avec franges de moiré à l'aide d'un modèle de retrait avec franges de moiré prédéfini pour acquérir une image de visage avec franges de moiré retirées, dans lequel avant que l'image de visage avec franges de moiré devant être vérifiée et l'image de visage initiale ne soient acquises, le modèle de retrait de franges de moiré est généré;
l'extraction de caractéristique sur l'image de visage avec franges de moiré retirées à l'aide d'un modèle de vérification faciale avec franges de moiré retirées prédéfini pour acquérir une caractéristique de visage avec franges de moiré retirées, et l'extraction de caractéristique sur l'image de visage initiale à l'aide d'un modèle de vérification faciale avec franges de moiré retirées pour acquérir une caractéristique de visage initiale, dans lequel avant l'acquisition de l'image de visage avec franges de moiré devant être vérifiée et l'image de visage initiale, un premier modèle de visage est généré, générant ainsi le modèle de vérification faciale avec franges de moiré retirées conformément au premier modèle de vérification faciale; et
la vérification faciale sur l'image de visage avec franges de moiré retirées et sur l'image de visage initiale en fonction de la caractéristique de visage avec franges de moiré retirées et la caractéristique de visage initiale, dans lequel
le dispositif de vérification faciale comprend en outre une seconde unité de construction (3061), une troisième unité de construction (3062) et une seconde unité d'entraînement (3063) qui sont configurées pour générer le premier modèle de vérification faciale, dans lequel la seconde unité de construction (3061) est conçue pour acquérir des images de visage de second type et pour construire une seconde collecte de données conformément aux images de visage de second type, la troisième unité de construction (3062) est conçue pour acquérir des images de troisième type correspondant à la seconde collecte de données de visage et pour construire une troisième collecte de données de visage conformément aux images de visage de troisième type, et la seconde unité d'entraînement (3063) est conçue pour réaliser l'entraînement de réseau de neurones à convolution de vérification faciale, CNN, en fonction de la seconde collecte de données de visage et de la troisième collecte de données de visage pour générer le premier modèle de vérification faciale, dans lequel les images de visage de second type sont des photos de visage de carte d'identité et des images d'autophoto de troisième type correspondant aux images faciale de deuxième type, dans lequel
le réglage précis de réseau est effectué sur le premier modèle de vérification faciale conformément à une collecte de données de visage avec franges de moiré retirées et à la troisième collecte de données de visage, générant ainsi le modèle de vérification faciale prédéfini avec franges de moiré retirées, dans lequel la synthèse sur la seconde collecte de données faciale en fonction d'un ou de plusieurs filigranes avec franges de moiré prédéfinis est réalisée pour acquérir une seconde collecte de données faciale avec franges de moiré, et l'opération de retrait de franges de moiré est effectuée sur chaque image dans la seconde collecte de données faciale avec franges de moiré à l'aide du modèle de retrait de franges de moiré pour générer la collecte de données faciale avec franges de moiré retirées.

6. Dispositif de vérification faciale selon la revendication 5, dans lequel le processeur est en outre configuré pour calculer une similarité entre la caractéristique faciale avec franges de moiré retirées et la caractéristique faciale initiale pour acquérir une valeur de similarité; pour estimer si l'image faciale avec franges de moiré retirées et l'image faciale initiale appartiennent à la même personne ou ne se basent pas sur la valeur de similarité; au cas où un résultat de jugement indique que l'image faciale avec franges de moiré retirées et l'image faciale initiale appartiennent à la même personne, déterminer que la vérification faciale a réussi; et au cas où un résultat d'estimation indique que l'image faciale avec franges de moiré retirées et l'image faciale initiale n'appartiennent pas à la même personne, déterminer que la vérification faciale a échoué.

7. Dispositif de vérification faciale selon la revendication 6, dans lequel le processeur est en outre configuré pour:
au cas où la valeur de similarité dépasse une valeur de seuil prédéfinie, déterminer que l'image faciale avec franges de moiré retirées et l'image faciale initiale appartiennent à la même personne; et
au cas où la valeur de similarité ne dépasse pas la valeur de seuil prédéfinie, déterminer que l'image faciale avec franges de moiré retirées et l'image faciale initiale n'appartiennent pas à la même personne.

8. Support d'enregistrement d'ordinateur, dans lequel est stockée une instruction exécutable par ordinateur, l'instruction exécutable par ordinateur étant configurée pour exécuter le procédé de vérification de faciale selon l'une quelconque des revendications 1 à 4.
